# EUROPÄISCHE PATENTSCHRIFT

(11) **EP 2 435 311 B1**
(45) Veröffentlichungstag und Bekanntmachung des Hinweises auf die Patenterteilung: **02.03.2016**
(21) Anmeldenummer: 10718083.8
(22) Anmeldetag: 29.04.2010
(51) Int. Cl.: B64F 5/00, B64D 11/00

(54) **VERFAHREN UND SYSTEM ZUR MONTAGE VON INTERIEURKOMPONENTEN IN EINEM FLUGZEUG**
METHOD AND SYSTEM FOR MOUNTING INTERIOR COMPONENTS IN AN AIRCRAFT
PROCÉDÉ ET SYSTÈME DE MONTAGE D'ÉLÉMENTS INTÉRIEURS DANS UN AÉRONEF

(30) Priorität: 29.05.2009 DE 102009023391; 29.05.2009 US 182304 P
(43) Veröffentlichungstag der Anmeldung: 04.04.2012
(73) Patentinhaber: Airbus Operations GmbH, 21129 Hamburg (DE)
(72) Erfinder: UMLAUFT, Sebastian, 22767 Hamburg (DE); HALFMANN, Niklas, 20357 Hamburg (DE); KRAUSE, Dieter, 21244 Buchholz (DE)
(74) Vertreter: Schicker, Silvia
(86) Internationale Anmeldenummer: PCT/EP2010/002641
(87) Internationale Veröffentlichungsnummer: WO 2010/136103

(56) Entgegenhaltungen:
- WO-A1-2010/136102
- WO-A2-2010/018090
- DE-A1-102006 034 862
- DE-A1-102007 050 422
- US-B1- 6 536 710

## Beschreibung

Die Erfindung betrifft ein Verfahren und ein System zur Montage von Interieurkomponenten in einem Flugzeug.

Bei der Montage von Interieurkomponenten in einem Flugzeug ist es derzeit üblich, Bauteile, wie z.B. Dadopaneele, Seitenverkleidungen, Deckenverkleidungen, Lichtbänder, Gepäckfächer und dergleichen einzeln mit der Flugzeugstruktur zu verbinden. Da jedes Bauteil separat positioniert und an der Flugzeugstruktur befestigt werden muss, ist die Montage dieser Bauteile sehr zeitaufwendig. In ähnlicher Weise werden derzeit auch beispielsweise als luftführende Leitungen einer Flugzeugklimaanlage oder der Wasserversorgung in einer Flugzeugkabine dienende Rohrleitungen sowie elektrische Leitungen in zeitaufwändiger Weise einzeln an der Flugzeugstruktur befestigt. Nach der Montage muss im Rahmen einer Endkontrolle die ordnungsgemäße Funktion aller Leitungen überprüft werden. Insbesondere müssen alle Rohrleitungen einer Dichtigkeitsprüfung unterzogen werden, während bei den elektrischen Leitungen eine Überprüfung aller Schnittstellen erforderlich ist. Diese Tests sind ebenfalls verhältnismäßig aufwändig, da die zu prüfenden Leitungen und Schnittstellen im montierten Zustand der Leitungen häufig nur schwer zugänglich sind. Dokument DE 102007050422, das als nächstliegender Stand der Technik angesehen wird, zeigt ein weiteres Verfahren zur Montage von Interieurkomponenten in einen Flugzeug.

Der Erfindung liegt die Aufgabe zugrunde, ein Verfahren und ein System bereitzustellen, die eine effiziente Montage von Interieurkomponenten in einem Flugzeug ermöglichen.

Zur Lösung dieser Aufgabe umfasst ein erfindungsgemäßes Verfahren zur Montage von Interieurkomponenten in einem Flugzeug das Vormontieren einer ersten Interieurkomponente. Die erste Interieurkomponente kann beispielsweise ein Überkopfgepäckfach oder ein Seitenverkleidungspaneel der Kabineninnenausstattung des Flugzeugs sein. Ferner wird bei dem erfindungsgemäßen Montageverfahren eine zweite Interieurkomponente vormontiert. Ähnlich wie die erste Interieürkomponente, kann die zweite Interieurkomponente ein Überkopfgepäckfach oder ein Seitenverkleidungspaneel sein. Vorzugsweise wird bei dem erfindungsgemäßen Montageverfahren ein Überkopfgepäckfach als erste Interieurkomponente und ein Seitenverkleidungspaneel als zweite Interieurkomponente verwendet.

Bei dem erfindungsgemäßen Montageverfahrens kann die vormontierte erste Interieurkomponente an einer Montagevorrichtung befestigt und anschließend mit der zweiten Interieurkomponente zu einem Einzelmodul verbunden werden. Alternativ dazu kann aber auch die zweite Interieurkomponente an einer Montagevorrichtung befestigt und anschließend mit der ersten Interieurkomponente zu einem Einzelmodul verbunden werden. Ferner können zunächst die erste und die zweite Interieurkomponente zu einem Einzelmodul verbunden und anschließend eine oder beide Interieurkomponente(n) an der Montagevorrichtung zu befestigt werden. Grundsätzlich ist es möglich, lediglich eine der beiden Interieurkomponenten an der Montagevorrichtung zu befestigen. Zwischen einer Interieurkomponente und der Montagevorrichtung besteht dann keine unmittelbare Verbindung. Falls dies zur Erhöhung der Stabilität des Einzelmoduls erwünscht oder erforderlich ist, können jedoch auch sowohl die erste als auch die zweite Interieurkomponente an der Montagevorrichtung befestigt werden.

Die oben beschriebenen Verfahrensschritte, Vormontieren einer ersten Interieurkomponente, Vormontieren einer zweiten Interieurkomponente und Herstellen eines Einzelmoduls können so oft wiederholt werden, bis an der Montagevorrichtung eine gewünschte Anzahl von Einzelmodulen gefestigt ist. Die an der Montagevorrichtung befestigten Einzelmodule werden anschließend zu einem an der Montagevorrichtung befestigten Großmodul verbunden. Ein Großmodul kann beispielsweise drei Einzelmodule umfassen, die ihrerseits jeweils ein Überkopfgepäckfach sowie ein Seitenverkleidungspaneel umfassen. Falls gewünscht oder erforderlich, kann das Großmodul jedoch auch eine beliebige andere Anzahl von Einzelmodulen aufweisen. Die endgültige Gestaltung des Großmoduls kann beispielsweise in Abhängigkeit von Parametern, wie z.B. dem Gewicht und dem Volumen der Einzelkomponenten des Großmoduls und folglich der Handhabbarkeit des Großmoduls in seinem vormontierten Zustand erfolgen.

Das vormontierte Großmodul wird schließlich von der Montagevorrichtung gelöst und im vormontierten Zustand in eine Endmontageposition in einem Flugzeugrumpfelement transportiert. Das Flugzeugrumpfelement kann beispielsweise eine an mindestens einer Stirnseite offene Rumpfschale sein. Alternativ dazu kann das Großmodul jedoch auch in einen nahezu vollständig oder vollständig aufgebauten Flugzeugrumpf eingebracht werden. Wesentlich ist lediglich, dass das Flugzeugrumpfelement einen Zugang aufweist, der das Einbringen des Großmoduls in seine Endmontageposition in dem Flugzeugrumpfelement ermöglicht. Um den Transport des Großmoduls in seine Endmontageposition in dem Flugzeugrumpfelement zu erleichtern, können einzelne Komponenten des Großmoduls, wie beispielsweise die Einzelmodule, aber auch die Interieurkomponenten der Einzelmodule relativ zueinander derart bewegbar sein, dass das Volumen des Großmoduls beim Transport in seine Endmontageposition in dem Flugzeugrumpfelement verringert werden kann.

Im letzten Schritt des erfindungsgemäßen Verfahrens zur Montage von Interieurkomponenten in dem Flugzeug wird das Großmodul in dem Flugzeugrumpfelement endmontiert. Bei der Endmontage kann das Großmodul beispielsweise mittels entsprechender Befestigungsvorrichtungen an definierten Befestigungspunkten an der Flugzeugstruktur befestigt werden.

Das erfindungsgemäße Verfahren zur Montage von Interieurkomponenten in einem Flugzeug hat den Vorteil, dass eine Vielzahl von Montageschritten in komfortabler Weise außerhalb des Flugzeugs durchgeführt werden kann. Dadurch kann die Interieurkomponentenmontage deutlich einfacher gestaltet werden. Dies ermöglicht unter Umständen auch eine Steigerung der Qualität, da beispielsweise Toleranzen der Bauteile des Großmoduls bei der Vormontage des Großmoduls außerhalb des Flugzeugs einfacher ausgeglichen werden können. Schließlich ermöglicht das erfindungsgemäße Verfahren die Parallelisierung von Montageschritten. Beispielsweise können auf einfache Art und Weise mehrere Großmodule parallel vormontiert werden. Dadurch kann der Montageprozess insgesamt effizienter gestaltet werden.

Bei dem erfindungsgemäßen Verfahren zur Montage von Interieurkomponenten in einem Flugzeug kann eine Fließmontage von Großmodulen vorgesehen sein, d.h. Großmodule können sequenziell vormontiert, in ihre Endmontageposition in dem Flugzeugrumpfelement transportiert und in dem Flugzeugrumpfelement endmontiert werden. Ein derartiges Vorgehen hat den Vorteil, dass einzelne, bei der Fließmontage der Großmodule eingesetzte Montagestationen einen lediglich geringen Arbeitungsumfang zu bewältigen haben und daher speziell an die ihnen gestellten Aufgagen angepasst werden können. Eine Störung an einer einzelnen Montagestation hat jedoch Zeitverzögerungen an nachfolgenden Stationen zur Folge. Darüber hinaus ist ein Fließmontageprozess vergleichsweise unflexibel und in seiner Kapazität begrenzt.

Alternativ dazu kann bei dem erfindungsgemäßen Montageverfahren eine Mehrzahl von an der Montagevorrichtung befestigten Großmodulen und/oder eine Mehrzahl von an der Montagevorrichtung befestigten Einzelmodulen zu einem an der Montagevorrichtung befestigten Kabinenaufbau verbunden werden. Der Kabinenaufbau kann, je nach Bedarf, einen unterschiedlichen Umfang aufweisen. Beispielsweise kann der Kabinenaufbau einen Teil der oder alle in dem Flugzeug zu verbauenden ersten und zweiten Interieurkomponenten, d.h. einen Teil oder alle der in dem Flugzeug zu verbauenden Einzelmodule bzw. Großmodule umfassen. Mit anderen Worten, das erfindungsgemäße Montageverfahren kann zur Realisierung einer externen Kabinenmontage herangezogen werden, bei der große Teile einer Flugzeugkabine außerhalb des Flugzeugs vormontiert werden. Bei einer derartigen Ausgestaltung des erfindungsgemäßen Verfahrens werden vorzugsweise mehrere Großmodule parallel aufgebaut. Für den Aufbau der Großmodule zuständige Arbeitsstationen führen dabei jeweils alle zur Fertigstellung der Großmodule erforderlichen Montagearbeiten aus. Eine derartige Ausgestaltung des erfindungsgemäßen Montageverfahrens ermöglicht die Realisierung eines sehr übersichtlichen Montageprozesses sowie eine übersichtliche Ausgestaltung der Großmodule mit kundenspezifischen Bauteilen. Darüber hinaus zeichnet sich ein derartiger Montageprozess durch eine hohe Flexibilität aus. Nachteilig ist jedoch der hohe Platzbedarf.

Bei dem erfindungsgemäßen Verfahren zur Montage von Interieurkomponenten in einem Flugzeug kann eine in Form eines Montagegestells ausgebildete Montagevorrichtung zum Einsatz kommen. Beispielsweise kann die Montagevorrichtung eine Mehrzahl von im Wesentlichen parallel zueinander angeordneten U-förmigen Trägern mit zwei vertikalen Stützstreben sowie einer die vertikalen Stützstreben miteinander verbindenden Horizontalstrebe umfassen. Die Träger können durch zwei horizontal verlaufende Haltestreben miteinander verbunden sein, die an den Horizontalstreben der Träger befestigt sein können. Darüber hinaus kann die Montagevorrichtung eine oder mehrere Führungseinrichtung(en) umfassen, mit deren Hilfe zu verbauende Komponenten und/oder Montagewerkzeuge wie gewünscht positioniert werden können.

Vorzugsweise wird bei dem erfindungsgemäßen Montageverfahren beim Verbinden einer Mehrzahl von an der Montagevorrichtung befestigen Einzelmodulen zu einem an der Montagevorrichtung befestigten Großmodul mindestens ein Einzelmodul horizontal relativ zu der Montagevorrichtung verschoben. In ähnlicher Weise kann beim Verbinden einer Mehrzahl von an der Montagevorrichtung befestigten Großmodulen zu einem an der Montagevorrichtung befestigten Kabinenaufbau mindestens ein Großmodul horizontal relativ zu der Montagevorrichtung verschoben werden. Eine derartige Ausgestaltung des erfindungsgemäßen Montageverfahrens ermöglicht die parallele Vormontage mehrerer Einzelmodule oder Großmodule und anschließend ein einfaches Verbinden dieser Einzelmodule bzw. Großmodule zu einem Großmodul bzw. einem Kabinenaufbau. Um eine horizontale Relativverschiebung eines Einzelmoduls bzw. eines Großmoduls zu der Montagevorrichtung zu ermöglichen, kann bei der Einzelmodulvormontage die erste und/oder die zweite Interieurkomponente horizontal verschiebbar an der Montagevorrichtung befestigt werden. Beispielsweise können die Einzel- und/oder die Großmodule horizontal verschiebbar an einer Haltestrebe der Montagevorrichtung befestigt werden.

Bei dem erfindungsgemäßen Montageverfahren können lediglich erste und zweite Interieurkomponenten, d.h. beispielsweise Überkopfgepäckfächer und Seitenverkleidungspaneele außerhalb des Flugzeugrumpfelements vormontiert werden. Es ist jedoch auch möglich, weitere Interieurkomponenten mit einem an der Montagevorrichtung befestigten Einzelmodul, einem an der Montagevorrichtung befestigten Großmodul und/oder einem an der Montagevorrichtung befestigten Kabinenaufbau zu verbinden. Beispielsweise können elektrische Leitungen, luftführende Leitungen einer Flugzeugklimaanlage oder der Wasserversorgung in der Flugzeugkabine dienende Rohrleitungen mit einem an der Montagevorrichtung befestigten Einzelmodul, einem an der Montagevorrichtung befestigten Großmodul und/oder einem an der Montagevorrichtung befestigten Kabinenaufbau verbunden werden. Ferner können Personal Service Units, Personal Service Channels sowie Einzelteile der Flugzeugbordküchen, die ggf., ähnlich wie die erste und die zweite Interieurkomponente, bereits vormontiert sein können, in das erfindungsgemäße Montageverfahren integriert und mit einem an der Montagevorrichtung befestigten Einzelmodul, einem an der Montagevorrichtung befestigten Großmodul und/oder einem and der Montagevorrichtung befestigten Kabinenaufbau verbunden werden.

Bei einer bevorzugten Ausführungsform des erfindungsgemäßen Verfahrens zur Montage von Interieurkomponenten in einem Flugzeug wird/werden ein an der Montagevorrichtung befestigtes Einzelmodul, ein an der Montagevorrichtung befestigtes Großmodul und/oder ein an der Montagevorrichtung befestigter Kabinenaufbau getestet. Die Tests können manuelle Tests, Sichtprüfungen und Maßnahmen der Qualitätssicherung, wie z.B. Prüfen von Oberflächen, aber auch Funktionstests mechanischer und elektrischer bzw. elektronischer Komponenten umfassen. Beispielsweise können in dem Einzelmodul, dem Großmodul oder dem Kabinenaufbau verbaute Leitungen der Flugzeugklimaanlage und/oder des Wasserversorgungssystems des Flugzeugs auf Dichtigkeit geprüft werden. Ferner ist es denkbar, ggf. auch unter Verwendung eines Simulationssystems zur Simulation bestimmter Testbedingungen oder Ereignisse, Funktionsprüfungen an in das Einzelmodul, das Großmodul oder den Kabinenaufbau integrierten elektrischen Leitungen oder Schnittstellen vorzunehmen.

Die Durchführung von Tests an einem Einzelmodul, einem Großmodul oder einem Kabinenaufbau ist in der Regel im an der Montagevorrichtung befestigen Zustand des Einzelmoduls, des Großmoduls oder des Kabinenaufbaus deutlich einfacher als im in dem Flugzeugrumpfelement montierten Zustand dieser Komponenten. Insbesondere sind das Einzelmodul, das Großmodul oder der Kabinenaufbau sowie einzelne Bauteile dieser Komponenten im an der Montagevorrichtung befestigten Zustand des Einzelmoduls, das Großmoduls oder des Kabinenaufbaus deutlich einfacher zugänglich als im in dem Flugzeugrumpfelement endmontierten Zustand. Im Rahmen des erfindungsgemäßen Montageverfahrens können umso umfassendere Tests durchgeführt werden, je mehr Komponenten vor den Tests zu einem zu testenden Einzelmodul, einem zu testenden Großmodul oder einem zu testenden Kabinenaufbau verbunden werden. Daher bietet sich insbesondere die Verbindung von mehreren Großmodulen zu einem möglichst vollständigen Kabinenaufbau an, wenn umfassende Tests an dem Kabinenaufbau, beispielsweise an luftführenden Leitungen, wasserführenden Leitungen oder elektrischen Leitungen und Schnittstellen durchgeführt werden sollen.

Wenn im Rahmen des erfindungsgemäßen Montageverfahrens lediglich Großmodule vormontiert werden, können die Großmodule unmittelbar nach der Beendigung der an den Großmodulen durchzuführenden Tests in ihre Endmontageposition in dem Flugzeugrumpfelement transportiert und in dem Flugzeugrumpfelement endmontiert werden. Wenn im Rahmen des erfindungsgemäßen Montageverfahrens dagegen mehrere Großmodule und/oder Einzelmodule zu einem an der Montagevorrichtung befestigten Kabinenaufbau verbunden werden, beispielsweise um umfassende Tests an dem Kabinenaufbau durchzuführen, werden nach dem Testen des Kabinenaufbaus vorzugsweise die miteinander verbundenen Großmodule des Kabinenaufbaus voneinander getrennt und einzeln in ihre Endmontageposition in dem Flugzeugrumpfelement transportiert. Dadurch kann auf den Einsatz einer zum Transport eines großvolumigen Kabinenaufbaus geeigneten Transportvorrichtung verzichtet werden.

Das Einzelmodul, das Großmodul und/oder der Kabinenaufbau wird/werden bei dem erfindungsgemäßen Verfahren zur Montage von Interieurkomponenten in einem Flugzeug vorzugsweise in einer Position an der Montagevorrichtung befestigt, die im Wesentlichen der Position entspricht, die das Einzelmodul, das Großmodul und/oder der Kabinenaufbau im in dem Flugzeugrumpfelement endmontierten Zustand einnimmt/einnehmen. Ferner wird das Großmodul vorzugsweise in einer Position zu dem Flugzeugrumpfelement transportiert, die im Wesentlichen der Position entspricht, die das Großmodul im in dem Flugzeugrumpfelement endmontierten Zustand einnimmt. Durch eine derartige Ausgestaltung des erfindungsgemäßen Montageverfahrens kann auf eine aufwendige Umpositionierung des Großmoduls für den Transport und die Endmontage in dem Flugzeugrumpfelement verzichtet werden. Darüber hinaus ermöglicht eine endmontagepositionnahe Positionierung des Einzelmoduls, des Großmoduls und/oder des Kabinenaufbaus in der Montagevorrichtung eine realitätsnahe Testdurchführung. Beispielsweise kann dadurch auf einfache und zuverlässige Weise geprüft werden, ob Einzelbauteile des Einzelmoduls, des Großmoduls und/oder des Kabinenaufbaus relativ zueinander richtig positioniert sind.

Grundsätzlich ist es möglich, das Großmodul manuell in seine Endmontageposition in dem Flugzeugrumpfelement zu transportieren. Der Transport des Großmoduls in seine Endmontageposition in dem Flugzeugrumpfelement erfolgt mit Hilfe eines Transportwagens. Wenn das Großmodul seine Endmontageposition in dem Flugzeugrumpfelement erreicht hat, kann es zunächst auf dem Transportwagen verbleiben und im auf dem Transportwagen gehaltenen Zustand an der Struktur des Flugzeugrumpfelements, beispielsweise an Spanten der Flugzeugrumpfelementstruktur befestigt werden. Vorzugsweise erfolgt eine Entkopplung des Großmoduls von dem Transportwagen erst dann, wenn das Großmodul zumindest provisorisch an der Struktur des Flugzeugrumpfelements befestigt ist. Nach der Befestigung des Großmoduls an der Struktur des Flugzeugrumpfelements kann der Transportwagen aus dem Flugzeugrumpfelement entfernt werden.

Die horizontale und/oder die vertikale Position des Großmoduls bei seiner Endmontage in dem Flugzeugrumpfelement wird vorzugsweise mit Hilfe des Transportwagens feinreguliert. Beispielsweise kann der Transportwagen mit einer Einrichtung oder mehreren Einrichtungen versehen sein, die eine Feinregulierung der horizontalen und/oder der vertikalen Position des Großmoduls relativ zu der Struktur des Flugzeugrumpfelements ermöglicht/ermöglichen. Zum Beispiel kann der Transportwagen mit einer Hubvorrichtung zur Regulierung der vertikalen Position des Größmoduls versehen sein. Ferner kann der Transportwagen dazu vorgesehen sein, mit einer Führungseinrichtung zusammen zu wirken, die eine Einstellung der horizontalen Position des Großmoduls relativ zu der Struktur des Flugzeugrumpfelements ermöglicht.

Ein erfindungsgemäßes System zur Montage von Interieurkomponenten in einem Flugzeug umfasst eine Station zum Vormontieren einer ersten Interieurkomponente sowie eine Station zum Vormontieren einer zweiten Interieurkomponente. Ferner ist eine Station zum Befestigen der ersten und/oder der zweiten Interieurkomponente an einer Montagevorrichtung, eine Station zum Verbinden der ersten und der zweiten Interieurkomponente zu einem Einzelmodul, eine Station zum Verbinden einer Mehrzahl von an der Montagevorrichtung befestigten Einzelmodulen zu einem an der Montagevorrichtung befestigten Großmodul, eine Station zum Lösen des Großmoduls von der Montagevorrichtung, eine Einrichtung zum Transportieren des Großmoduls in eine Endmontageposition in einem Flugzeugrumpfelement und eine Station zum Endmontieren des Großmoduls in dem Flugzeugrumpfelement vorgesehen. Die einzelnen Stationen des erfindungsgemäßen Montagesystems können als räumlich voneinander getrennte Stationen ausgebildet sein. Alternativ dazu ist es jedoch auch möglich, dass mehrere Stationen zum Ausführen einzelner Montageschritte räumlich in einen gemeinsamen Montagebereich integriert sind.

Das erfindungsgemäße Montagesystem umfasst vorzugsweise ferner eine Station zum Verbinden einer Mehrzahl von an der Montagevorrichtung befestigten Großmodulen zu einem an der Montagevorrichtung befestigten Kabinenaufbau.

Ferner kann das Montagesystem eine Station zum Verbinden weiterer Interieurkomponenten mit einem an der Montagevorrichtung befestigten Einzelmodul, einem an der Montagevorrichtung befestigten Großmodul und/oder einem an der Montagevorrichtung befestigten Kabinenaufbau umfassen.

Eine bevorzugte Ausführungsform des erfindungsgemäßen Systems zur Montage von Interieurkomponenten umfasst ferner eine Station zum Testen eines an der Montagevorrichtung befestigten Einzelmoduls, eines an der Montagevorrichtung befestigten Großmoduls und/oder eines an der Montagevorrichtung befestigten Kabinenaufbaus. Diese Teststation kann mit allen benötigten Testeinrichtungen, einschließlich eines Simulationssystems zur Simulation bestimmter Testbedingungen und/oder Ereignisse ausgestattet sein.

Die Montagevorrichtung des erfindungsgemäßen Montagesystems ist vorzugsweise so gestaltet, dass das Einzelmodul, das Großmodul und/oder der Kabinenaufbau in einer Position an der Montagevorrichtung befestigbar ist/sind, die im Wesentlichen der Position entspricht, die das Einzelmodul, das Großmodul und/oder der Kabinenaufbau im in dem Flugzeugrumpfelement endmontierten Zustand einnimmt/einnehmen.

Ferner umfasst das erfindungsgemäße Montagesystem vorzugsweise einen Transportwagen zum Transportieren des Großmoduls in seine Endmontageposition in dem Flugzeugrumpfelement. Der Transportwagen kann so gestaltet sein, dass das Großmodul in einer Position zu dem Flugzeugrumpfelement transportierbar ist, die im Wesentlichen der Position entspricht, die das Großmodul im in dem Flugzeugrumpfelement endmontierten Zustand einnimmt. Ferner kann der Transportwagen eine Einrichtung oder mehrere Einrichtungen zur Feinregulierung der horizontalen und/oder der vertikalen Position des Großmoduls in seiner Endmontageposition in dem Flugzeugrumpfelement umfassen.

Eine bevorzugte Ausführungsform der Erfindung wird nun anhand der beigefügten schematischen Zeichnungen näher erläutert, von denen:
- Figur 1: ein Fließdiagramm eines Verfahrens zur Montage von Interieurkomponenten in einem Flugzeug zeigt,
- Figur 2: ein Layout eines Systems zur Montage von Interieurkomponenten in einem Flugzeug zeigt, und
- Figur 3: eine dreidimensionale Darstellung eines Ausschnitts eines Systems zur Montage von Interieurkomponenten in einem Flugzeug zeigt.

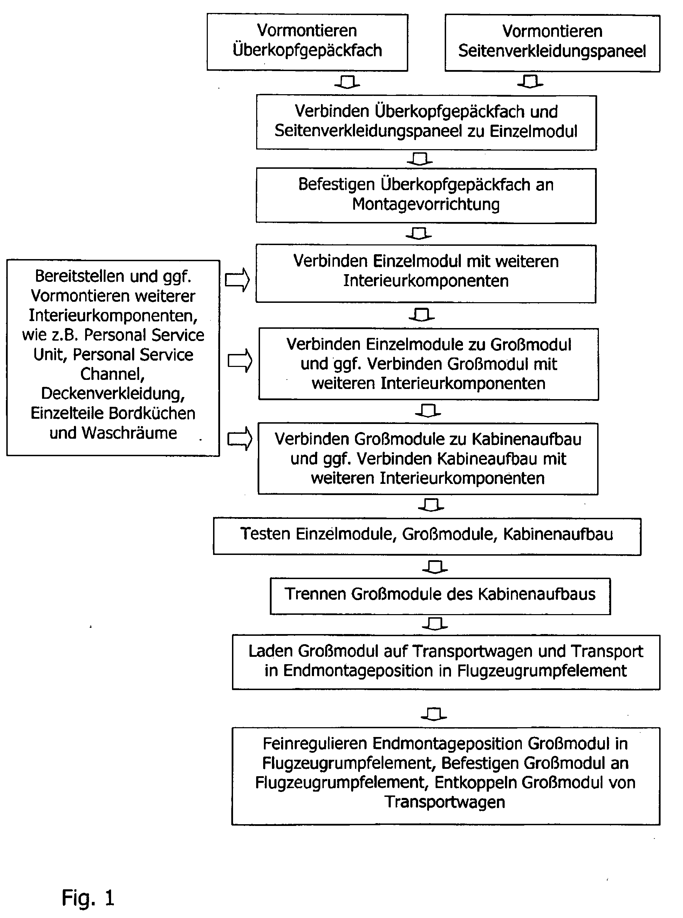

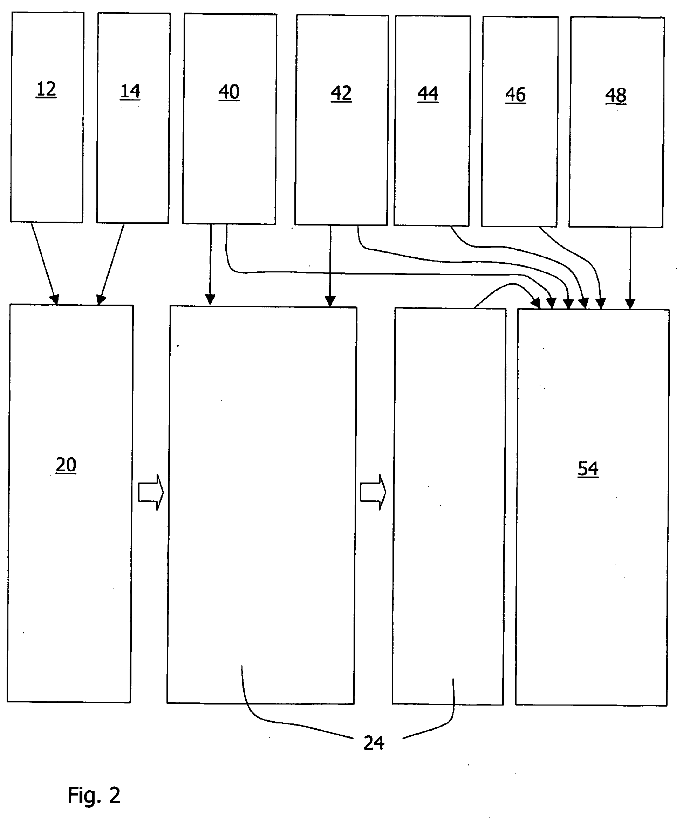

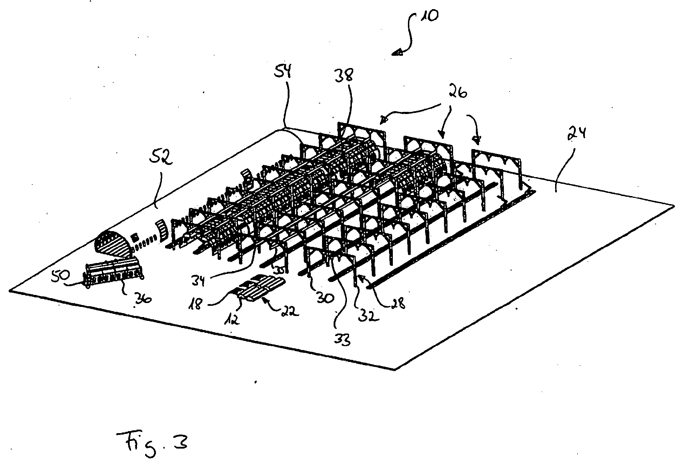

In den Figuren 1 bis 3 ist ein Verfahren und ein System 10 zur Montage von Interieurkomponenten in einem Flugzeug gezeigt. Wie am Besten in Figur 2 zu erkennen ist, umfasst das System 10 eine Station 12 zum Vormontierten einer ersten Interieurkomponente 14. Die erste Interieurkomponente 14 ist in Form eines Überkopfgepäckfachs ausgebildet (siehe Figur 3). Ferner umfasst das System 10 eine von der Station 12 räumlich getrennte Station 16 zum Vormontieren einer zweiten Interieurkomponente 18. Die zweite Interieurkomponente 18 ist in Form eines Seitenverkleidungspaneels einer Flugzeugkabinenverkleidung ausgebildet (siehe Figur 3).

In den Stationen 12 und 16 kann eine parallele Vormontage der ersten Interieurkomponente 14 und der zweiten Interieurkomponente 18 erfolgen. Die erste Interieurkomponente 14 und die zweite Interieurkomponente 18 werden in einer Einzelmodulvormontagestation 20 zu einem Einzelmodul 22 verbunden. Es versteht sich, dass die Einzelmodulvormontagestation 20 die parallele Vormontage mehrerer Einzelmodule 22 erlaubt.

In einer Kabinenvormontage- und Prüfstation 24 wird die erste Interieurkomponente 14, d.h. das Überkopfgepäckfach eines jeden Einzelmoduls 22 und damit das Einzelmodul 22 insgesamt an einer in Figur 3 veranschaulichten Montagevorrichtung 26 befestigt. Die Montagevorrichtung 26 umfasst ein Montagegestell mit einer Mehrzahl von im Wesentlichen parallel zueinander angeordneten Trägern 28. Jeder Träger 28 weist zwei Vertikalstützen 30, 32 sowie eine die Vertikalstützen 30, 32 miteinander verbindende Horizontalstütze 33 auf. Die Träger 28 sind durch zwei horizontal verlaufende Haltestreben 34, 35 miteinander verbunden. Bei der Befestigung eines Einzelmoduls 22 an der Montagevorrichtung 26 wird die als Überkopfgepäckfach ausgebildete erste Interieurkomponente 14 an einer Haltestrebe 34, 35 der Montagevorrichtung 26 horizontal verschiebbar angebracht. Falls gewünscht, kann zur Stabilisierung des Einzelmoduls 22 auch die zweite Interieurkomponente 18 zumindest zeitweise an der Montagevorrichtung 26 befestigt werden. Beispielsweise kann eine Befestigung der zweiten Interieurkomponente 18 an einer Vertikalstütze 30, 32 eines Trägers 28 der Montagevorrichtung 26 erfolgen.

In dem in den Figuren 1 bis 3 veranschaulichten Ausführungsbeispiel eines Verfahrens und eines Systems 10 zur Montage von Interieurkomponenten in einem Flugzeug werden die erste Interieurkomponente 14 und die zweite Interieurkomponente 18 zu einem Einzelmodul 22 verbunden, bevor die erste Interieurkomponente 14 und damit das Einzelmodul 22 an der Montagevorrichtung 26 befestigt wird. Falls gewünscht, kann die Reihenfolge dieser Montageschritte auch umgekehrt werden, d.h. die erste Interieurkomponente 14 kann an der Montagevorrichtung 26 befestigt werden, bevor sie mit der zweiten Interieurkomponente 18 zu einem Einzelmodul 22 verbunden wird. Ferner kann eine Befestigung des Einzelmoduls 22 an der Montagevorrichtung 26 erfolgen, indem statt der ersten Interieurkomponente 14 die zweite Interieurkomponente 18 an der Montagevorrichtung 26 befestigt wird. Auch in diesem Fall kann die Einzelmodulvormontage vor oder nach der Befestigung der zweiten Interieurkomponente 18 an der Montagevorrichtung 26 erfolgen.

In der Kabinenvormontage- und Prüfstation 24 werden ferner mehrere an der Montagevorrichtung 26 befestigte Einzelmodule 22 zu einem an der Montagevorrichtung 26 befestigten Großmodul 36 (siehe Fig. 3) verbunden. Ein Großmodul 36 kann beispielsweise drei Einzelmodule 22 umfassen. Beim Verbinden der Einzelmodule 22 zu einem Großmodul 36 werden die Einzelmodule 22 horizontal entlang der Haltestreben 34, 35 der Montagevorrichtung 26 und somit horizontal relativ zu der Montagevorrichtung 26 verschoben, bis die Einzelmodule 22 auf komfortable Art und Weise zu einem Großmodul 36 miteinander verbunden werden können.

Ferner werden in der Kabinenvormontage- und Prüfstation 24 mehrere an der Montagevorrichtung 26 befestigte Großmodule 36 zu einem an der Montagevorrichtung 26 befestigten Kabinenaufbau 38 (siehe Fig. 3) miteinander verbunden. Hierzu werden die Großmodule 36 horizontal relativ zu der Montagevorrichtung 26 verschoben, bis sie eine gewünschte Position erreicht haben, in der sie auf einfache und komfortable Art und Weise zu dem Kabinenaufbau 38 miteinander verbunden werden können. Alternativ dazu können auch mehrere Einzelmodule 22 unmittelbar zu einem Kabinenaufbau 38 miteinander verbunden werden, ohne vorher zu einem Großmodul 36 vormontiert zu werden. Schließlich ist es denkbar, mehrere Einzelmodule 22 zu einem Großmodul 36 vorzumontieren und anschließend das Großmodul 36 durch die Verbindung mit weiteren Einzelmodulen 22 zu einem Kabinenaufbau 38 zu erweitern.

Wie am besten aus Fig. 2 ersichtlich wird, umfasst das Montagesystem 10 fünf weitere Vormontagestationen 40 bis 48. In der Vormontagestation 40 werden Personal Service Units und Personal Service Channels vormontiert. Die Vormontagestation 42 dient der Vormontage von Einzelteilen der Deckenverkleidung, der Flugzeugbordküche und der Flugzeugwaschräume. Ferner werden in der Vormontagestation 42 auch Einzelteile der Personal Service Units und der Personal Service Channels vormontiert. Die Vormontagestationen 44, 46 dienen der Vormontage von Flugzeugbordküchenmodulen und Waschraummodulen. In der Vormontagestation 48 werden schließlich sogenannte Crown Area Rackmodule, d.h. Gepäckfächer vormontiert, die zur Montage in einem zentralen Deckenbereich der Flugzeugkabine vorgesehen sind.

Die in den Vormontagestationen 40, 42 vormontierten Komponenten werden zumindest zum Teil in der Kabinenvormontage- und Prüfstation 24 in an der Montagevorrichtung 26 befestigte Einzelmodule 22, in an der Montagevorrichtung 26 befestigte Großmodule 36 oder in einen an der Montagevorrichtung 26 befestigten Kabinenaufbau 38 integriert. Ferner werden die Einzelmodule 22, die Großmodule 36 und der Kabinenaufbau 38 in der Kabinenvormontage- und Prüfstation 24 um elektrische Leitungen, Leitungen eines Flugzeugwasserversorgungssystems sowie Leitungen einer Flugzeugklimaanlage ergänzt.

Weiterhin findet in der Kabinenvormontage- und Prüfstation 24 eine Prüfung der Einzelmodule 22, der Großmodule 36 und des Kabinenaufbaus 38 statt. An den Einzelmodulen 22, den Großmodulen 36 und dem Kabinenaufbau 38 durchgeführte Tests können manuelle Prüfungen, Sichtprüfungen, Maßnahmen der Qualitätskontrolle, wie zum Beispiel Oberflächenprüfungen, aber auch Funktionstests einzelner Komponenten, Leitungsdichtigkeitsprüfungen sowie Tests an den elektrischen Leitungen und Schnittstellen umfassen. Bei diesen Tests kann auch ein Simulationssystem zum Einsatz kommen, das durch die Ausgabe entsprechender Signale bestimmte Bedingungen und/oder Ereignisse simuliert und prüft, ob die getesteten Komponenten, beispielsweise elektrische Leitungen und Schnittstellen, die gewünschte Reaktion auf diese Bedingungen und/oder Ereignisse zeigen. Je nach Bedarf können die Tests bereits an den Einzelmodulen 22 oder an den Großmodulen 36 durchgeführt werden. Besonders umfassende Tests sind jedoch an dem Kabinenaufbau 38 möglich, insbesondere wenn der Kabinenaufbau 38 überdies bereits um möglichst viele weitere Interieurkomponenten ergänzt wurde, d.h. die spätere Flugzeugkabine möglichst weitgehend außerhalb des Flugzeugs aufgebaut wurde.

Das Testen der Einzelmodule 22, der Großmodule 36 und des Kabinenaufbaus 38 in der Kabinenvormontage- und Prüfstation 24 ist insofern vorteilhaft, als dass die einzelnen Komponenten der Einzelmodule 22, der Großmodule 36 und des Kabinenaufbaus 38 in der Kabinenvormontage- und Prüfstation 24 leicht zugänglich sind. Auf diese Art und Weise können die Tests vergleichsweise einfach und in zeitsparender Weise durchgeführt werden. Darüber hinaus ist es möglich, bei den Tests durchgefallene Komponenten rasch und einfach zu ersetzen. Wie am besten in Fig. 3 zu erkennen ist, sind die Einzelmodule 22, die Großmodule 36 und der Kabinenaufbau 38 in der Kabinenvormontage- und Prüfstation 24 in einer Position an der Montagevorrichtung 26 befestigt, die im Wesentlichen der Position entspricht, die diese Komponenten im in einem Flugzeug montierten Zustand einnehmen. Dadurch können an den Einzelmodulen 22, den Großmodulen 36 und dem Kabinenaufbau 38 durchzuführende Funktionstests besonders realitätsnah durchgeführt werden. Dennoch sind alle Einzelbauteile dieser Komponenten sehr gut zugänglich.

Nach Beendigung der Tests in der Kabinenvormontage- und Prüfstation 24 sind die getesteten Flugzeuginterieurkomponenten zur Endmontage bereit. Hierzu werden in der Kabinenvormontage- und Prüfstation 24 an der Montagevorrichtung 26 befestigte Großmodule 36 von der Montagevorrichtung 26 gelöst und auf einen Transportwagen 50 geladen. Einzeln an der Montagevorrichtung 26 befestigte Großmodule 36 können unmittelbar auf den Transportwagen 50 geladen werden. Wenn mehrere Größmodule 36 zu einem Kabinenaufbau 38 verbunden sind, ist es vor dem Verladen der Großmodule 36 auf den Transportwagen 50 erforderlich, den Kabinenaufbau 38 wieder in einzelne Großmodule 36 zu unterteilen. Mittels des Transportwagens 50 werden die Großmodule 36 zu einem Flugzeugrumpfelement 52 transportiert. In einer Endmontage- und Integrationsstation 54 findet schließlich die Endmontage der Großmodule 36 in dem Flugzeugrumpfelement 52 statt.

Wie am besten in Fig. 3 zu erkennen ist, ist das Flugzeugrumpfelement 52 in Form einer an seiner Stirnseite offenen Rumpfschale ausgebildet. Dadurch können die Großmodule 36 auf einfache Weise in das Flugzeugrumpfelement 52 transportiert werden. Bei ihrem Transport auf dem Transportwagen 50 werden die Großmodule 36 in einer Position auf dem Transportwagen 50 gehalten, der im Wesentlichen der Position entspricht, die die Großmodule 36 im in dem Flugzeugrumpfelement 52 endmontierten Zustand einnehmen. Dadurch können aufwändige Positionsänderungen der Großmodule 36 bei der Endmontage in dem Flugzeugrumpfelement 52 vermieden werden.

Beim Laden der Großmodule 36 auf den Transportwagen 50 wird der Transportwagen 50 in der Kabinenvormontage- und Prüfstation 24 in eine geeignete Position gebracht. Die Positionierung des Transportwagens 50 kann dabei durch geeignete Führungseinrichtungen unterstützt werden. In ähnlicher Weise wird der Transportwagen 50 bei der Endmontage der Großmodule 36 in dem Flugzeugrumpfelement 52 so positioniert, dass die Großmodule 36 noch im auf dem Transportwagen 50 gehaltenen Zustand an der Struktur des Flugzeugrumpfelements 52 befestigt werden können. Der Transportwagen 50 ist mit entsprechenden Einrichtungen zur Feinregulierung der horizontalen sowie der vertikalen Position eines auf dem Transportwagen 50 gehaltenen Großmoduls 36 ausgestattet, so dass das Großmodul 36 mit Hilfe des Transportwagens 50 optimal in seine Entmontageposition in dem Flugzeugrumpfelement 52 gebracht werden kann. Eine Entkopplung des Großmoduls 36 von dem Transportwagen 50 findet erst dann statt, wenn das Großmodul 36 zumindest provisorisch an der Struktur des Flugzeugrumpfelements 52 befestigt ist.

Teile der in den Vormontagestationen 40, 42 vormontierten Komponenten sowie die in den Vormontagestationen 44, 46, 48 vormontierten Komponenten werden unmittelbar zu dem Flugzeugrumpfelement 52 transportiert und in der Endmontage- und Integrationsstation 54 unmittelbar in das Flugzeugrumpfelement 52 integriert.

## Patentansprüche

1. Verfahren zur Montage von Interieurkomponenten in einem Flugzeug mit den Schritten:
- Vormontieren einer ersten Interieurkomponente (14),
- Vormontieren einer zweiten Interieurkomponente (18),
- Befestigen der ersten und/oder der zweiten Interieurkomponente (14, 18) an einer Montagevorrichtung (26) und Verbinden der ersten und der zweiten Interieurkomponente (14, 18) zu einem Einzelmodul (22),
- Verbinden einer Mehrzahl von an der Montagevorrichtung (26) befestigten Einzelmodulen (22) zu einem an der Montagevorrichtung (26) befestigten Großmodul (36),
- Lösen des Großmoduls (36) von der Montagevorrichtung (26) und Transportieren des Großmoduls (36) in eine Endmontageposition in einem Flugzeugrumpfelement (52) mit Hilfe eines Transportwagens (50), und
- Endmontieren des Großmoduls (36) in dem Flugzeugrumpfelement (52).

2. Verfahren nach Anspruch 1,
**dadurch gekennzeichnet, dass** eine Mehrzahl von an der Montagevorrichtung (26) befestigten Großmodulen (36) und/oder eine Mehrzahl von an der Montagevorrichtung (26) befestigten Einzelmodulen (22) zu einem an der Montagevorrichtung (26) befestigten Kabinenaufbau (38) verbunden werden.

3. Verfahren nach Anspruch 1 oder 2,
**dadurch gekennzeichnet, dass** beim Verbinden einer Mehrzahl von an der Montagevorrichtung (26) befestigten Einzelmodulen (22) zu einem an der Montagevorrichtung (26) befestigten Großmodul (36) mindestens ein Einzelmodul (22) horizontal relativ zu der Montagevorrichtung (26) verschoben wird und/oder dass beim Verbinden einer Mehrzahl von an der Montagevorrichtung (26) befestigten Großmodulen (36) zu einem an der Montagevorrichtung (26) befestigten Kabinenaufbau (38) mindestens ein Großmodul (36) horizontal relativ zu der Montagevorrichtung (26) verschoben wird.

4. Verfahren nach einem der Ansprüche 1 bis 3,
**dadurch gekennzeichnet, dass** weitere Interieurkomponenten mit einem an der Montagevorrichtung (26) befestigten Einzelmodul (22), einem an der Montagevorrichtung (26) befestigten Großmodul (36) und/oder einem an der Montagevorrichtung (26) befestigten Kabinenaufbau (38) verbunden werden.

5. Verfahren nach einem der Ansprüche 1 bis 4,
**dadurch gekennzeichnet, dass** ein an der Montagevorrichtung (26) befestigtes Einzelmodul (22), ein an der Montagevorrichtung (26) befestigtes Großmodul (36) und/oder ein an der Montagevorrichtung (26) befestigter Kabinenaufbau (38) getestet wird/werden.

6. Verfahren nach Anspruch 5,
**dadurch gekennzeichnet, dass** nach dem Testen eines an der Montagevorrichtung (26) befestigten Kabinenaufbaus (38) die miteinander verbundenen Großmodule (36) des Kabinenaufbaus (38) voneinander getrennt und einzeln in eine Endmontageposition in dem Flugzeugrumpfelement (52) transportiert werden.

7. Verfahren nach einem der Ansprüche 1 bis 6,
**dadurch gekennzeichnet, dass** das Einzelmodul (22), das Großmodul (36) und/oder der Kabinenaufbau (38) in einer Position an der Montagevorrichtung (26) befestigt wird/werden, die im Wesentlichen der Position entspricht, die das Einzelmodul (22), das Großmodul (36) und/oder der Kabinenaufbau (38) im in dem Flugzeugrumpfelement (52) endmontierten Zustand einnimmt/einnehmen, und/oder dass das Großmodul (36) in einer Position zu dem Flugzeugrumpfelement (52) transportiert wird, die im Wesentlichen der Position entspricht, die das Großmodul (36) im in dem Flugzeugrumpfelement (52) endmontierten Zustand einnimmt.

8. Verfahren nach einem der Ansprüche 1 bis 7,
**dadurch gekennzeichnet, dass** das Großmodul (36) im auf dem Transportwagen (50) gehaltenen Zustand an der Struktur des Flugzeugrumpfelements (52) befestigt und nach seiner Befestigung an der Struktur des Flugzeugrumpfelements (52) von dem Transportwagen (50) entkoppelt wird.

9. Verfahren nach Anspruch 8,
**dadurch gekennzeichnet, dass** die horizontale und/oder die vertikale Position des Großmoduls (36) in seiner Endmontageposition in dem Flugzeugrumpfelement (52) mit Hilfe des Transportwagens (50) feinreguliert wird.

10. System zur Montage von Interieurkomponenten in einem Flugzeug mit:
- einer Station (12) zum Vormontieren einer ersten Interieurkomponente (14),
- einer Station (16) zum Vormontieren einer zweiten Interieurkomponente (18),
- einer Station (20) zum Befestigen der ersten und/oder der zweiten Interieurkomponente (14, 18) an einer Montagevorrichtung (26),
- einer Station (20) zum Verbinden der ersten und der zweiten Interieurkomponente (14, 18) zu einem Einzelmodul (22),
- einer Station (24) zum Verbinden einer Mehrzahl von an der Montagevorrichtung (26) befestigten Einzelmodulen (22) zu einem an der Montagevorrichtung (26) befestigten Großmodul (36)
- einer Station (24) zum Lösen des Großmoduls (36) von der Montagevorrichtung (26),
- einem Transportwagen (50) zum Transportieren des Großmoduls (36) in eine Endmontageposition in einem Flugzeugrumpfelement (52), und
- einer Station (54) zum Endmontieren des Großmoduls (36) in dem Flugzeugrumpfelement (52).

11. System nach Anspruch 10,
**gekennzeichnet durch** eine Station (24) zum Verbinden einer Mehrzahl von an der Montagevorrichtung (26) befestigten Großmodulen (36) zu einem an der Montagevorrichtung (26) befestigten Kabinenaufbau (38).

12. System nach Anspruch 10 oder 11,
**gekennzeichnet durch** eine Station (24) zum Verbinden weiterer Interieurkomponenten mit einem an der Montagevorrichtung (26) befestigten Einzelmodul (22), einem an der Montagevorrichtung (26) befestigten Großmodul (36) und/oder einem an der Montagevorrichtung (26) befestigten Kabinenaufbau (38).

13. System nach einem der Ansprüche 10 bis 12,
**gekennzeichnet durch** eine Station (24) zum Testen eines an der Montagevorrichtung (26) befestigten Einzelmoduls (22), eines an der Montagevorrichtung (26) befestigten Großmoduls (36) und/oder eines an der Montagevorrichtung (26) befestigten Kabinenaufbaus (38).

14. System nach einem der Ansprüche 10 bis 13,
**dadurch gekennzeichnet dass**, die Montagevorrichtung (26) so gestaltet ist, dass das Einzelmodul (22), das Großmodul (36) und/oder der Kabinenaufbau (38) in einer Position an der Montagevorrichtung (26) befestigbar ist/sind, die im Wesentlichen der Position entspricht, die das Einzelmodul (22), das Großmodul (36) und/oder der Kabinenaufbau (38) im in dem Flugzeugrumpfelement (52) endmontierten Zustand einnimmt/einnehmen.

15. System nach einem der Ansprüche 10 bis 14,
**dadurch gekennzeichnet, dass** der Transportwagen (50) so gestaltet ist, dass das Großmodul (36) in einer Position zu dem Flugzeugrumpfelement (52) transportierbar ist, die im Wesentlichen der Position entspricht, die das Großmodul (36) im in dem Flugzeugrumpfelement (52) endmontierten Zustand einnimmt, und/oder wobei der Transportwagen (50) eine Einrichtung zur Feinregulierung der horizontalen und/oder der vertikalen Position des Großmoduls (36) in seiner Endmontageposition in dem Flugzeugrumpfelement (52) umfasst.

## Claims

1. Method for mounting interior components in an aircraft having the steps:
- preassembling a first interior component (14),
- preassembling a second interior component (18),
- fastening the first and/or the second interior component (14, 18) to an assembly apparatus (26) and connecting the first and the second interior component (14, 18) to form an individual module (22),
- connecting a plurality of individual modules (22) fastened to the assembly apparatus (26) to form a large module (36) fastened to the assembly apparatus (26),
- detaching the large module (36) from the assembly apparatus (26) and transporting the large module (36) into a final-mounting position in an aircraft fuselage element (52) with the aid of a transporting carriage (50), and
- final-mounting of the large module (36) in the aircraft fuselage element (52).

2. Method according to Claim 1,
**characterised in that** a plurality of large modules (36) fastened to the assembly apparatus (26) and/or a plurality of individual modules (22) fastened to the assembly apparatus (26) are connected to form a cabin structure (38) fastened to the assembly apparatus (26).

3. Method according to Claim 1 or 2,
**characterised in that**, on connecting a plurality of individual modules (22) fastened to the assembly apparatus (26) to form a large module (36) fastened to the assembly apparatus (26), at least one individual module (22) is displaced horizontally relative to the assembly apparatus (26) and/or **in that**, on connecting a plurality of large modules (36) fastened to the assembly apparatus (26) to form a cabin structure (38) fastened to the assembly apparatus (26), at least one large module (36) is displaced horizontally relative to the assembly apparatus (26).

4. Method according to one of Claims 1 to 3,
**characterised in that** further interior components are connected to an individual module (22) fastened to the assembly apparatus (26), to a large module (36) fastened to the assembly apparatus (26) and/or to a cabin structure (38) fastened to the assembly apparatus (26).

5. Method according to one of Claims 1 to 4,
**characterised in that** an individual module (22) fastened to the assembly apparatus (26), a large module (36) fastened to the assembly apparatus (26) and/or a cabin structure (38) fastened to the assembly apparatus (26) is/are tested.

6. Method according to Claim 5,
**characterised in that**, after the testing of a cabin structure (38) fastened to the assembly apparatus (26), the large modules (36) of the cabin structure (38) connected to one another are separated from one another and transported individually into a final-mounting position in the aircraft fuselage element (52).

7. Method according to one of Claims 1 to 6,
**characterised in that** the individual module (22), the large module (36) and/or the cabin structure (38) is/are fastened to the assembly apparatus (26) in a position which corresponds substantially to the position which the individual module (22), the large module (36) and/or the cabin structure (38) assumes/assume in the final-mounted state in the aircraft fuselage element (52), and/or **in that** the large module (36) is transported to the aircraft fuselage element (52) in a position which corresponds substantially to the position which the large module (36) assumes in the final-mounted state in the aircraft fuselage element (52).

8. Method according to one of Claims 1 to 7,
**characterised in that** the large module (36) is fastened to the structure of the aircraft fuselage element (52) in the state in which it is held on the transporting carriage (52), and is uncoupled from the transporting carriage (50) after it has been fastened to the structure of the aircraft fuselage element (52).

9. Method according to Claim 8,
**characterised in that** the horizontal and/or vertical position of the large module (36) in its final-mounting position in the aircraft fuselage element (52) is finely adjusted with the aid of the transporting carriage (50).

10. System for mounting interior components in an aircraft having:
- a station (12) for preassembling a first interior component (14),
- a station (16) for preassembling a second interior component (18),
- a station (20) for fastening the first and/or the second interior component (14, 18) to an assembly apparatus (26),
- a station (20) for connecting the first and the second interior component (14, 18) to form an individual modules (22),
- a station (24) for connecting a plurality of individual modules (22) fastened to the assembly apparatus (26) to form a large module (36) fastened to the assembly apparatus (26),
- a station (24) for detaching the large module (36) from the assembly apparatus (26),
- a transporting carriage (50) for transporting the large module (36) into a final-mounting position in an aircraft fuselage element (52), and
- a station (54) for final-mounting of the large module (36) in the aircraft fuselage element (52).

11. System according to Claim 10,
**characterised by** a station (24) for connecting a plurality of large modules (36) fastened to the assembly apparatus (26) to form a cabin structure (38) fastened to the assembly apparatus (26).

12. System according to Claim 10 or 11,
**characterised by** a station (24) for connecting further interior components to an individual module (22) fastened to the assembly apparatus (26), to a large module (36) fastened to the assembly apparatus (26) and/or to a cabin structure (38) fastened to the assembly apparatus (26).

13. System according to one of Claims 10 to 12,
**characterised by** a station (24) for testing an individual module (22) fastened to the assembly apparatus (26), a large module (36) fastened to the assembly apparatus (26) and/or a cabin structure (38) fastened to the assembly apparatus (26).

14. System according to one of Claims 10 to 13,
**characterised in that** the assembly apparatus (26) is designed such that the individual module (22), the large module (36) and/or the cabin structure (38) can be fastened to the assembly apparatus (26) in a position which corresponds substantially to the position which the individual module (22), the large module (36) and/or the cabin structure (38) assumes/assume in the final-mounted state in the aircraft fuselage element (52).

15. System according to one of Claims 10 to 14,
**characterised in that** the transporting carriage (50) is designed such that the large module (36) can be transported to the aircraft fuselage element (52) in a position which corresponds substantially to the position which the large module (36) assumes in the final-mounted state in the aircraft fuselage element (52), and/or the transporting carriage (50) comprises a device for fine adjustment of the horizontal and/or the vertical position of the large module (36) in its final-mounting position in the aircraft fuselage element (52).

## Revendications

1. Procédé de montage d'éléments intérieurs dans un aéronef, comprenant les étapes suivantes :
- le prémontage d'un premier élément intérieur (14),
- le prémontage d'un deuxième élément intérieur (18),
- la fixation du premier et/ou du deuxième élément intérieur (14, 18) à un dispositif de montage (26) et l'assemblage du premier et du deuxième élément intérieur (14, 18) pour former un module individuel (22),
- l'assemblage de plusieurs modules individuels (22) fixés au dispositif de montage (26) pour former un module de grande surface (36) fixé au dispositif de montage (26),
- le détachement dudit module de grande surface (36) du dispositif de montage (26) et le transport du module de grande surface (36) jusqu'à une position de montage final dans un élément de fuselage d'aéronef (52) à l'aide d'un chariot transporteur (50) et
- le montage final du module de grande surface (36) dans ledit élément de fuselage d'aéronef (52).

2. Procédé selon la revendication 1,
**caractérisé en ce qu'**une pluralité de modules de grande surface (36) fixés au dispositif de montage (26) et/ou une pluralité de modules individuels (22) fixés au dispositif de montage (26) sont assemblées pour former une structure de cabine (38) fixée au dispositif de montage (26).

3. Procédé selon la revendication 1 ou 2,
**caractérisé en ce qu'**au moins un module individuel (22) est horizontalement décalé par rapport au dispositif de montage (26) lors de l'assemblage d'une pluralité de modules individuels (22) fixés au dispositif de montage (26) pour former un module de grande surface (36) fixé au dispositif de montage (26) et/ou qu'au moins un module de grande surface (36) est horizontalement décalé par rapport au dispositif de montage (26) lors de l'assemblage d'une pluralité de modules de grande surface (36) fixés au dispositif de montage (26) pour former une structure de cabine (38) fixée au dispositif de montage (26).

4. Procédé l'une des revendications 1 à 3,
**caractérisé en ce que** d'autres éléments intérieurs sont assemblés à un module individuel (22) fixé au dispositif de montage (26), à un module de grande surface (36) fixé au dispositif de montage (26) et/ou à une structure de cabine (38) fixée au dispositif de montage (26).

5. Procédé l'une des revendications 1 à 4,
**caractérisé en ce qu'**un module individuel (22) fixé au dispositif de montage (26), un module de grande surface (36) fixé au dispositif de montage (26) et/ou une structure de cabine (38) fixée au dispositif de montage (26) est/sont testé(s).

6. Procédé selon la revendication 5,
**caractérisé en ce qu'**après avoir testé une structure de cabine (38) fixée au dispositif de montage (26), les modules de grande surface (36) assemblés entre eux de la structure de cabine (38) sont séparés et transportés séparément jusqu'à une position de montage final dans l'élément de fuselage d'aéronef (52).

7. Procédé l'une des revendications 1 à 6,
**caractérisé en ce que** le module individuel (22), le module de grande surface (36) et/ou la structure de cabine (38) sont fixés au dispositif de montage (26) dans une position correspondant sensiblement à la position qu'occupe/occupent le module individuel (22), le module de grande surface (36) et/ou la structure de cabine (38) une fois définitivement montés dans l'élément de fuselage d'aéronef (52), et/ou que le module de grande surface (36) est transporté vers l'élément de fuselage d'aéronef (52) dans une position correspondant sensiblement à la position qu'occupe le module de grande surface (36) une fois définitivement monté dans l'élément de fuselage d'aéronef (52).

8. Procédé l'une des revendications 1 à 7,
**caractérisé en ce que** le module de grande surface (36) est fixé dans son état de maintien sur le chariot transporteur (50) à la structure de l'élément de fuselage d'aéronef (52) et désaccouplé du chariot transporteur (50) après sa fixation à la structure de l'élément de fuselage d'aéronef (52).

9. Procédé selon la revendication 8,
**caractérisé en ce que** la position horizontale et/ou verticale du module de grande surface (36) est ajustée avec précision à l'aide du chariot transporteur (50) dans sa position de montage final dans l'élément de fuselage d'aéronef (52).

10. Système de montage d'éléments intérieurs dans un aéronef, comprenant
- une station (12) permettant de prémonter un premier élément intérieur (14),
- une station (16) permettant de prémonter un deuxième élément intérieur (18),
- une station (20) permettant de fixer le premier et/ou le deuxième élément intérieur (14, 18) à un dispositif de montage (26),
- une station (20) permettant d'assembler le premier et/ou le deuxième élément intérieur (14, 18) pour former un module individuel (22),
- une station (24) permettant d'assembler plusieurs modules individuels (22) fixés au dispositif de montage (26) pour former un module de grande surface (36) fixé au dispositif de montage (26),
- une station (24) permettant de détacher le module de grande surface (36) du dispositif de montage (26),
- un chariot transporteur (50) permettant de transporter le module de grande surface (36) jusqu'à une position de montage final dans un élément de fuselage d'aéronef (52) et
- une station (54) permettant de monter définitivement le module de grande surface (36) dans l'élément de fuselage d'aéronef (52).

11. Système selon la revendication 10,
**caractérisé par** une station (24) permettant d'assembler plusieurs modules de grande surface (36) fixés au dispositif de montage (26) à une structure de cabine (38) fixée au dispositif de montage (26).

12. Système selon la revendication 10 ou 11,
**caractérisé par** une station (24) permettant d'assembler d'autres éléments intérieurs à un module individuel (22) fixé au dispositif de montage (26), à un module de grande surface (36) fixé au dispositif de montage (26) et/ou à une structure de cabine (38) fixée au dispositif de montage (26).

13. Système l'une des revendications 10 à 12,
**caractérisé par** une station (24) permettant de tester un module individuel (22) fixé au dispositif de montage (26), un module de grande surface (36) fixé au dispositif de montage (26) et/ou une structure de cabine (38) fixée au dispositif de montage (26).

14. Système l'une des revendications 10 à 13,
**caractérisé en ce que** le dispositif de montage (26) est conçu de sorte que le module individuel (22), le module de grande surface (26) et/ou la structure de cabine (38) peut/peuvent être fixé(s) au dispositif de montage (26) dans une position correspondant sensiblement à la position qu'occupe/occupent le module individuel (22), le module de grande surface (36) et/ou la structure de cabine (38) une fois définitivement monté dans l'élément de fuselage d'aéronef (52).

15. Système l'une des revendications 10 à 14,
**caractérisé en ce que** le chariot transporteur (50) est conçu de sorte que le module de grande surface (36) peut être transporté jusque dans l'élément de fuselage d'aéronef (52) dans une position correspondant sensiblement à la position qu'occupe le module de grande surface (36) une fois définitivement monté dans l'élément de fuselage d'aéronef (52), et/ou le chariot transporteur (50) comportant un dispositif permettant d'ajuster avec précision la position horizontale et/ou verticale du module de grande surface (36) dans sa position de montage final dans l'élément de fuselage d'aéronef (52).
